# EUROPÄISCHE PATENTSCHRIFT

(11) **EP 1 053 089 B1**
(45) Veröffentlichungstag und Bekanntmachung des Hinweises auf die Patenterteilung: **10.09.2003**
(21) Anmeldenummer: 99910205.6
(22) Anmeldetag: 08.02.1999
(51) Int. Cl.: B29C 33/48, B29C 45/44, B29C 33/00

(54) **VORRICHTUNG ZUM HERSTELLEN VON FLUIDBEHÄLTERN**
DEVICE FOR PRODUCING FLUID CONTAINERS
DISPOSITIF POUR LA FABRICATION DE RECIPIENTS DE FLUIDE

(30) Priorität: 11.02.1998 DE 19805466
(43) Veröffentlichungstag der Anmeldung: 22.11.2000
(73) Patentinhaber: Volkswagen Aktiengesellschaft, 38436 Wolfsburg (DE); Metallwerke Harzgerode GmbH, 06493 Harzgerode (DE)
(72) Erfinder: WAGNER, Christiane, D-38106 Braunschweig (DE); BENDER, Werner, D-35444 Biebertal (DE)
(86) Internationale Anmeldenummer: EP9900809
(87) Internationale Veröffentlichungsnummer: WO99041054

(56) Entgegenhaltungen:
- EP-A- 0 595 491
- EP-A- 0 640 457
- DE-A- 1 783 082
- DE-A- 3 106 952
- FR-A- 2 522 579
- GB-A- 2 157 616
- GB-A- 2 227 445
- US-A- 5 102 607

## Beschreibung

Die Erfindung betrifft eine Vorrichtung zum Herstellen von Ölwannen oder Getriebeölbehältern für Brennkraftmaschinen, insbesondere für Kraftfahrzeuge, mit wenigstens einem Innenformteil und mehreren Außenformteilen, welche derart benachbart zueinander anordnbar sind, daß zwischen diesen ein Formhohlraum gebildet ist, wobei wenigstens ein aus- und einziehbares Formteil als zusätzliches Innenformteil vorgesehen ist , gemäß dem Oberbegriff des Anspruchs 1.

Fluidbehälter, wie beispielsweise eine Ölwanne einer Brennkraftmaschine, nehmen eine vorbestimmte Menge an Fluid, wie beispielsweise Öl auf. Um ein Ölvolumen, beispielsweise einer Ölwanne, zu vergrößern ist es aus der Zeitschrift "Automobil Revue", Nr. 19/3. Mai 1990, Seite 47 bei Rennmotoren bekannt, flache seitliche Ausbuchtungen vorzusehen. Die Herstellung derartiger Fluidbehälter ist jedoch wegen des großen Formteileaufwandes und der Notwendigkeit von Losteilen, beispielsweise zum Ausbilden von Hinterschnitten im Bereich der seitlichen Ausbuchtungen, teuer und umständlich. Ferner ist wegen der unterschiedlichen Einbaulagen und Einbauumgebungsbedingungen, beispielsweise ein und desselben Motors mit einer derartigen Ölwanne in verschiedenen Kraftfahrzeugtypen, eine Serienproduktion nicht möglich, da einerseits wegen der Losteile eine Automatisierung nur schwierig erfolgen kann und andererseits in verschiedenen Kraftfahrzeugtypen die zusätzlich angeformten Ausbuchtungen Bauraumprobleme aufwerfen können. Dies würde viele verschiedene Formen erfordern.

Aus der deutsche Offenlegungsschrift DE 31 06 952 A1 ist eine Metallgußform zum Gießen eines Hohlkörpers mit einwärts geneigter Seitenwand bekannt Hierbei weist ein Gußkem die Form eines Pyramidenstumpfes auf und es sind erste und zweite Gleitkerne vorgesehen, welche mechanisch am Gußkem derart angelenkt sind, daß beim Herausziehen des Gußkernes aus der Form die Gleitkerne mechanisch an eine Position eingezogen werden, an der sich vorher der Gußkem befand. Diese Metallgußform ist jedoch wegen der mechanischen Verbindung zwischen Gußkern und Gleitkemen aufwendig und kompliziert.

Bei Änderungen der gewünschten Form des Gußstückes müssen darüber hinaus der Gußkem und alle Gleitkeme ausgewechselt werden, was umständlich, zeitaufwendig und kostenintensiv ist.

Der vorliegenden Erfindung liegt die Aufgabe zugrunde, eine Vorrichtung der obengenannten Art zur Verfügung zu stellen, wobei die obengenannten Nachteile überwunden werden und in der Art einer Plattformbasis von ein und derselben Vorrichtung in einer automatisierten Serienproduktion entsprechende Fluidbehälter ohne Austausch von Formteilen herstellbar sind.

Diese Aufgabe wird erfindungsgemäß durch eine Vorrichtung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß das aus- und einziehbare Formteil integriert in das Innenformteil ausgebildet ist, wobei am Innenformteil ein Aufnahmeraum vorgesehen ist, in welchem das eingezogene Formteil zu liegen kommt, wobei das ausgezogene ausund einziehbare Formteil seitlich und/oder stirnseitig über das Innenformteil hinausragt und wobei ferner ein Betätigungsmittel zum automatischen Aus- und Einziehen des aus- und einziehbaren Formteiles derart ausgebildet und angeordnet ist, daß das ausgezogene ausund einziehbare Formteil in seiner Neigung variabel vorbestimmbar anordnbar ist.

Dies hat den Vorteil, daß durch die aus- und einziehbaren Formteile zusätzliche Taschen an der Ölwanne oder dem Getriebeölbehälter, ausbildbar sind, welche ein entsprechendes Fluid- bzw. Ölvolumen vergrößern, wobei durch die Anordnung einer mit dieser Ölwanne oder diesem Getriebeölbehälter ausgestattete Brennkraftmaschine sowie zugehöriger Nebenaggregate entsprechende Freiräume bzw. Fertigungsrandbedingungen durch eine entsprechende Neigung der aus- und einziehbaren Formteile optimal ausnutzbar sind. Mit anderen Worten sind auf einfache und schnelle Weise Ölwannen oder Getriebeölbehältem mit seitlichen Taschen mit unterschiedlichen Neigungen zur Erweiterung eines Ölvolumens herstellbar.

Zum Zwecke einer vollständigen Entleerbarkeit einer hergestellten Ölwanne oder eines Getriebeölbehältem, beispielsweise bei einem Ölwechsel, sind an einer Seite des Innenformteiles zwei aus- und einziehbare Formteile angeordnet, wobei die beiden aus- und einziehbaren Formteile bezüglich des Innenformteiles um einen vorbestimmten Winkel geneigt sind und ferner der vorbestimmte Winkel für ein aus- und einziehbares Formteil beispielsweise 15 Grad und für das entsprechend andere aus- und einziehbare Formteil beispielsweise 19 Grad beträgt. Hierdurch ergibt sich bei einer entsprechend geneigten Einbaulage eines mit dieser Ölwanne oder diesem Getriebeölbehälter versehenen Verbrennungsmotors in einem Kraftfahrzeug, beispielsweise mit einer Einbaulagenneigung von 17 Grad, daß die eine durch die beiden aus- und einziehbaren Formteile gebildete Tasche vollständig entleerbar ist, während in der entsprechend anderen durch die beiden aus- und einziehbaren Formteile gebildeten Tasche alles Öl zusammenläuft, so daß über diese Tasche eine vollständige Ölentleerung durchführbar ist.

Zur Anpassung an unterschiedliche Einbaulagen des herzustellenden Fluidbehälters und/oder zur Unterbringung besonders großer Taschen können die aus- und einziehbaren Formteile gebogen ausgebildet sein.

In einer bevorzugten Weiterbildung der Erfindung ist in wenigstens einem aus- und einziehbaren Formteil und/oder in einem diesem zugeordneten Außenformteil eine Pinole vorgesehen ist, welche in einer durch dieses aus- und einziehbare Formteil ausgebildeten Tasche der Ölwanne bzw. des Getriebebehälters eine Ölablaßöffnung ausbildet.

Für einen reibungslosen Herstellungsvorgang weisen die Pinole und/oder die Außenformteile vorteilhafterweise eine Heizeinrichtung undloder die aus- und einziehbaren Formteile eine Kühleinrichtung auf.

Zusätzliche seitliche Taschen an einem zu formenden Fluidbehälter mit entsprechenden Hinterschneidungen erzielt man auf einfache Weise dadurch, daß das aus- und einziehbare Formteil in einer Ebene senkrecht zu einer Entformrichtung des Innenformteiles über das Innenformteil hinaus ragt.

Zeckmäßigerweise sind die Außenformteile an eine Kontur des aus- und einziehbare Formteil im ausgezogenen Zustand entsprechend angepaßt.
- Fig. 1: in schematischer perspektivischer Darstellung ein Innenformteil einer bevorzugten Ausführungsform einer erfindungsgemäßen Vorrichtung,
- Fig. 2: eine Schnittansicht einer bevorzugten Ausführungsform einer erfindungsgemäßen Vorrichtung und
- Fig. 3: eine perspektivische Ansicht einer mit der erfindungsgemäßen Vorrichtung und dem erfindungsgemäßen Verfahren hergestellten Ölwanne.

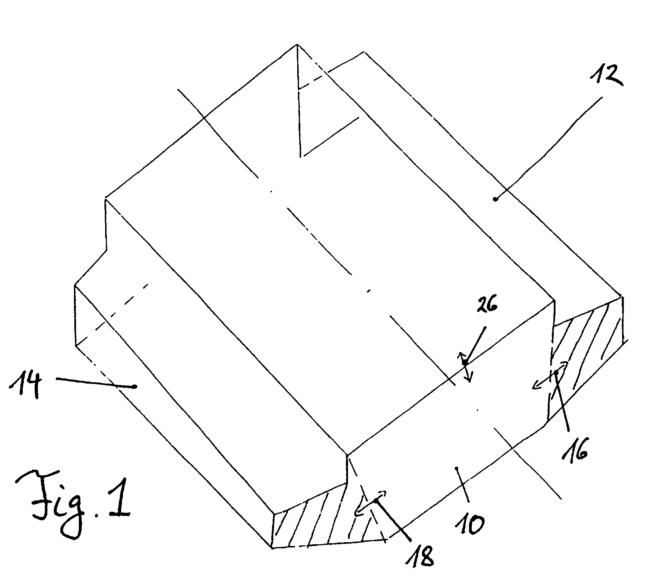

Das in Fig. 1 dargestellte Innenformteil 10 umfaßt an jeder Seite ein aus- und einziehbares Formteil 12 und 14. Aus Darstellungsgründen sind entsprechende Außenformteile in Fig. 1 nicht dargestellt.

Erfindungsgemäß sind die aus- und einziehbaren Formteile 12 und 14 jeweils in Pfeilrichtungen 16 und 18 aus dem Innenformteil 10 ausziehbar und in das Innenformteil 10 hinein einziehbar. Mit anderen Worten sind die aus- und einziehbaren Formteile 12 und 14 in das Innenformteil 10 integriert.

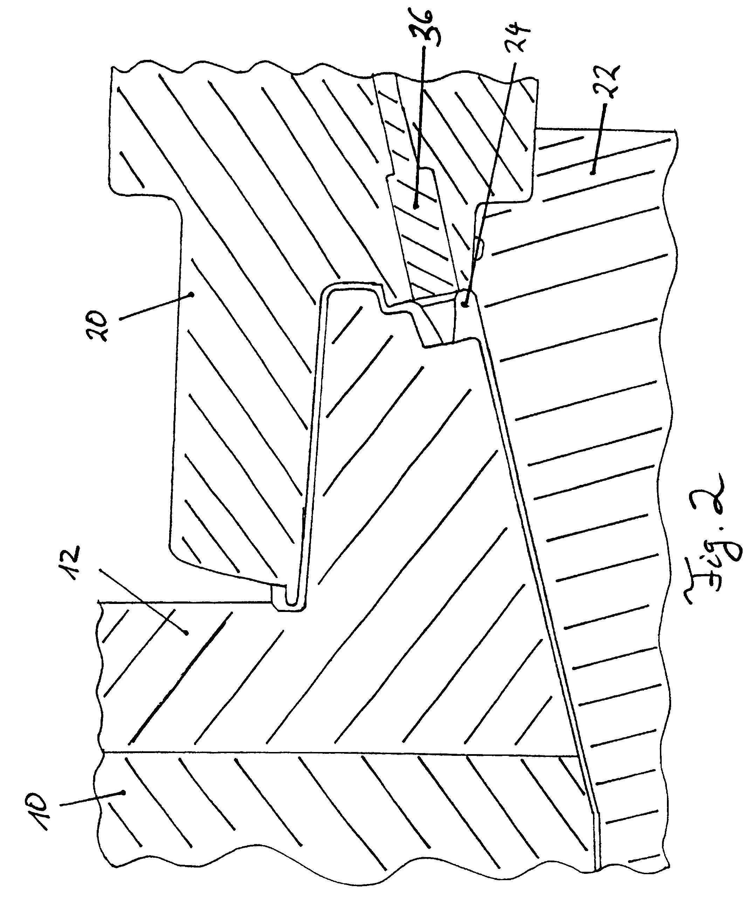

Zum Ausformen eines Fluidbehälters, wie beispielsweise einer Ölwanne oder eines Getriebeölbehälters, werden die aus- und einziehbaren Formteile 12 und 14 in die in Fig. 1 dargestellte Position ausgezogen und, wie in Fig. 2 dargestellt, mittels Außenformteilen 20 und 22 derart angeordnet, daß sich ein Formhohlraum 24 ergibt. Der Formhohlraum 24 wird mit Gußmaterial, wie beispielsweise Kunststoff, Metall, Aluminium oder einer Aluminiumlegierung gefüllt und der Gußwerkstoff wird anschließend ausgehärtet. Die Einziehbarkeit des zusätzlichen Formteils 12 in das Innenformteil 10 ist in Fig. 2 lediglich aus Darstellungsgründen nicht sichtbar.

Nach dem Aushärten des Gußwerkstoffes sind die Formteile 10, 12, 14, 20 und 22 zu entfernen. Die Außenformteile 20 und 22 werden dazu einfach nach außen wegbewegt. Das Innenformteil kann jedoch, wegen der sich in den Fluidbehälter erstreckenden aus- und einziehbaren Formteile 12 und 14 nicht nach oben (Pfeilrichtung 26 in Fig. 1) herausgezogen werden. Daher werden zunächst die aus- und einziehbaren Formteile 12 und 14 in das Innenformteil 10 hinein eingezogen. Anschließend kann das Innenformteil 10 aus dem hergestellten Fluidbehälter nach oben heraus bewegt werden.

Das aus- und einziehen der Formteile 12 und 14 erfolgt bevorzugt automatisch mittels nicht näher dargestellten Betätigungseinrichtungen. Diese können beispielsweise elektromotorisch oder hydraulisch angetrieben sein. Durch diese erfindungsgemäße, bevorzugte Ausgestaltung der Vorrichtung ist eine automatisierte Serienproduktion von Fluidbehältern möglich. Die Betätigungseinrichtungen sind dabei bevorzugt derart ausgebildet, daß beispielsweise die Neigung der aus- und einziehbaren Formteile 12 und 14 und damit die Neigung der damit angeformten Taschen variabel vorbestimmbar ist Somit können mit ein und derselben Vorrichtung Fluidbehälter, wie beispielsweise Ölwannen, für unterschiedliche Einbaulagen und unter Ausnutzung unterschiedlicher Bauräume für die Taschen hergestellt werden.

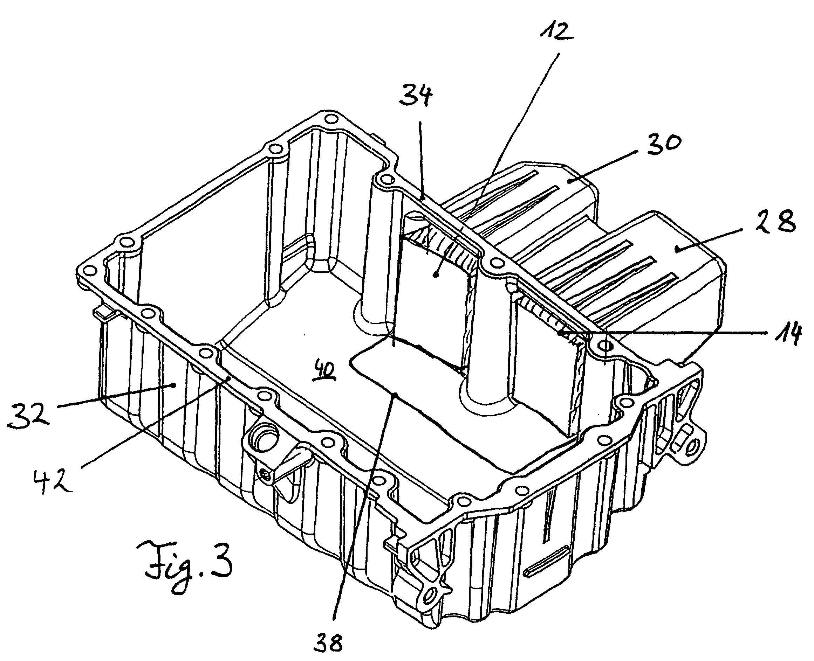

Fig. 3 veranschaulicht in perspektivischer Darstellung beispielhaft eine mit der erfindungsgemäßen Vorrichtung Hergestellte Ölwanne 32 mit seitlichen Taschen 28 und 30, welche durch schematisch angedeutete aus- und einziehbaren Formteile 12 und 14 angeformt worden sind. Diese aus- und einziehbaren Formteile 12 und 14 sind als Schieber 12, 14 ausgebildet und in unterschiedlichen Neigungen bezüglich der Ölwanne ausgezogen, so daß auch die angeformten Taschen 28 und 30 unterschiedliche Neigungen bzgl. der Ölwanne 32 aufweisen.

Wie aus diesem Beispiel hervorgeht können seitlich am Innenformteil 10 auch mehrere diskrete aus- und einziehbare Formteile 12, 14 vorgesehen sein, wobei bevorzugt die jeweiligen Betätigungsmittel für die aus- und einziehbaren Formteile 12 eine individuelle Ausrichtung, insbesondere bezüglich einer Neigung zum Innenformteil 10, zulassen.

Eine der in Fig. 3 dargestellten Taschen 28 ist um 15 Grad und die andere Tasche 30 ist um 19 Grad bezüglich einer Seitenwandung 34 geneigt Bei einer geneigten Einbaulage einer mit dieser Ölwanne 32 versehenen Brennkraftmaschine in einem Kraftfahrzeug um 17 Grad bewirkt diese bevorzugte Ausgestaltung der Ölwanne 32, daß die eine Tasche 28 bei einem fälligen Ölwechsel vollständig entleert wird, während über die andere Tasche 30, welche eine Restneigung von 2 Grad hat, der Ölwechsel über eine Ölablaßöffnung vorgenommen werden kann.

Die Art und Weise einer bevorzugten Ausbildung einer Ölablaßöffnung ist aus Fig. 2 ersichtlich. Eine schräg laufende Pinole 36 ist im Außenformteil 20 angeordnet, welche beim Herstellungsverfahren eine entsprechende Öffnung in einer Seitenwandung der diesem Außenformteil 20 zugeordneten Tasche bewirkt. Während des Herstellungsprozesses wird die Pinole bevorzugt beheizt. Femer werden bevorzugt die aus- und einziehbaren Formteile 12 und 14 währende des Herstellungsprozesses gekühlt und die Außenformteile 20 und 22 beheizt.

Fig. 2 veranschaulicht ferner, daß die Außenformteile 20 und 22 in ihrer jeweiligen Kontur an eine Kontur des ausgezogenen Formteiles 10 angepaßt sind, so daß sich ein entsprechender Formhohlraum 24 ergibt Dies trifft analog auch für das andere Formteil 14 bzw. alle weiteren ggf. vorgesehenen Formteile zu.

Wie sich ferner aus Fig. 3 ergibt, zeichnet sich ein mittels der erfindungsgemäßen Vorrichtung bzw. dem erfindungsgemäßen Verfahren hergestellter Fluidbehälter 32 dadurch aus, daß sich eine Kontur 38 der zusätzlichen aus- und einziehbaren Formteile an einem Boden des Fluidbehälters 32 zeigt. Durch einen entsprechenden unvermeidlichen Übergang zwischen dem Innenformteil 10 und den Formteilen 12, 14 kommt es zum Abdruck der Konturlinie 38 am Boden 40. Mit anderen Worten umschließt bzw. umgreift in dieser Ausführungsform das Innenformteil 10 teilweise die Formteile 12 und 14.

## Patentansprüche

1. Vorrichtung zum Herstellen von Ölwannen oder Getriebeölbehältem (32) für Brennkraftmaschinen, insbesondere für Kraftfahrzeuge, mit wenigstens einem Innenformteil (10) und mehreren Außenformteilen (20,22), welche derart benachbart zueinander anordnbar sind, daß zwischen diesen ein Formhohlraum (24) gebildet ist, wobei wenigstens ein aus- und einziehbares Formteil (12,14) als zusätzliches Innenformteil vorgesehen ist,
**dadurch gekennzeichnet, daß**
das aus- und einziehbare Formteil (12,14) integriert in das Innenformteil (10) ausgebildet ist, wobei am Innenformteil (10) ein Aufnahmeraum vorgesehen ist, in welchem das eingezogene Formteil (12,14) zu liegen kommt, wobei das ausgezogene aus- und einziehbare Formteil seitlich und/oder stinseitig über das Innenformteil (10) hinausragt und wobei ferner ein Betätigungsmittel zum automatischen Aus- und Einziehen des aus- und einziehbaren Formteiles (12,14) derart ausgebildet und angeordnet ist, daß das ausgezogene aus- und einziehbare Formteil (12,14) in seiner Neigung variabel vorbestimmbar angeordnet werden kann.

2. Vorrichtung nach einem der vorhergehenden Ansprüche, **dadurch gekennzeichnet, daß** an einer Seite des Innenformteiles (10) zwei aus- und einziehbare Formteile (12,14) angeordnet sind.

3. Vorrichtung nach Anspruch 2, **dadurch gekennzeichnet, daß** die beiden aus- und einziehbaren Formteile (12,14) bezüglich des Innenformteiles (10) um einen vorbestimmten Winkel geneigt sind.

4. Vorrichtung nach Anspruch 3, **dadurch gekennzeichnet, daß** der vorbestimmte Winkel für ein aus- und einziehbares Formteil (12) vorzugsweise etwa 15 Grad und für das entsprechend andere aus- und einziehbare Formteil (14) vorzugsweise etwa 19 Grad beträgt.

5. Vorrichtung nach einem der vorhergehenden Ansprüche, **dadurch gekennzeichnet, daß** die aus- und einziehbaren Formteile (12,14) gebogen ausgebildet sind.

6. Vorrichtung nach einem der vorhergehenden Ansprüche, **dadurch gekennzeichnet, daß** in wenigstens einem aus- und einziehbaren Formteil (12,14) und/oder in einem diesem zugeordneten Außenformteil (20,22) eine Pinole (36) vorgesehen ist, welche in einer durch dieses aus- und einziehbare Formteil (12) ausgebildeten Tasche (30) des Fluidbehälters (32) eine Ölablaßöffnung ausbildet.

7. Vorrichtung nach Anspruch 6, **dadurch gekennzeichnet, daß** die Pinole (36) eine Heizeinrichtung aufweist.

8. Vorrichtung nach einem der vorhergehenden Ansprüche, **dadurch gekennzeichnet, daß** das aus- und einziehbare Formteil (12,14) eine Kühleinrichtung ausweisen.

9. Vorrichtung nach einem der vorhergehenden Ansprüche, **dadurch gekennzeichnet, daß** die Außenformteile (20,22) eine Heizeinrichtung aufweist.

10. Vorrichtung nach einem der vorhergehenden Ansprüche, **dadurch gekennzeichnet, daß** das aus- und einziehbare Formteil (12,14) hinterschneidend bezüglich einer Entformrichtung des Innenformteiles (10) über das Innenformteil (10) hinaus ragt.

11. Vorrichtung nach einem der vorhergehenden Ansprüche, **dadurch gekennzeichnet, daß** die Außenformteile (20,22) an eine Kontur des aus- und einziehbare Formteiles (12,14) im ausgezogenen Zustand entsprechend angepaßt sind.

## Claims

1. Apparatus for producing oil troughs or gear oil containers (32) for internal combustion engines, in particular for motor vehicles, having at least one inner mould part (10) and a number of outer mould parts (20, 22) which can be arranged adjacent to one another in such a manner that a mould cavity (24) is formed between them, at least one extendable and retractable mould part (12, 14) being provided as an additional inner mould part, **characterized in that** the extendable and retractable mould part (12, 14) is designed such that it is integrated in the inner mould part (10), a receiving chamber being provided on the inner mould part (10), in which chamber the retracted mould part (12, 14) comes to lie, the extended extendable and retractable mould part protruding over the inner mould part (10) laterally and/or on the end side, and, furthermore, an actuating means for the automatic extension and retraction of the extendable and retractable mould part (12, 14) being designed and arranged in such a manner that the extended extendable and retractable mould part (12, 14) can be arranged such that its inclination can be variably predetermined.

2. Apparatus according to one of the preceding claims, **characterized in that** two extendable and retractable mould parts (12, 14) are arranged on one side of the inner mould part (10).

3. Apparatus according to Claim 2, **characterized in that** the two extendable and retractable mould parts (12, 14) are inclined by a predetermined angle with respect to the inner mould part (10).

4. Apparatus according to Claim 3, **characterized in that** the predetermined angle for an extendable and retractable mould part (12) is preferably approximately 15 degrees, and for the correspondingly other extendable and retractable mould part (14) is preferably approximately 19 degrees.

5. Apparatus according to one of the preceding claims, **characterized in that** the extendable and retractable mould parts (12, 14) are of curved design.

6. Apparatus according to one of the preceding claims, **characterized in that** a centre sleeve (36) is provided in at least one extendable and retractable mould part (12, 14) and/or in an outer mould part (20, 22) assigned to the latter, the said centre sleeve forming an oil outlet opening in a pocket (30) of the fluid container (32), which pocket is formed by this extendable and retractable mould part (12).

7. Apparatus according to Claim 6, **characterized in that** the centre sleeve (36) has a heating device.

8. Apparatus according to one of the preceding claims, **characterized in that** the extendable and retractable mould part (12, 14) has a cooling device.

9. Apparatus according to one of the preceding claims, **characterized in that** the outer mould parts (20, 22) have a heating device.

10. Apparatus according to one of the preceding claims, **characterized in that** the extendable and retractable mould part (12, 14) protrudes beyond the inner mould part (10) in an undercutting manner with respect to a demoulding direction of the inner mould part (10).

11. Apparatus according to one of the preceding claims, **characterized in that** the outer mould parts (20, 22) are correspondingly matched to a contour of the extendable and retractable mould part (12, 14) in the extended state.

## Revendications

1. Dispositif pour la fabrication de carters à huile ou de réservoirs d'huile de réducteur (32) pour des moteurs à combustion interne, en particulier pour des véhicules à moteur, avec au moins une partie de moule intérieure (10) et plusieurs parties de moule extérieures (20, 22), qui peuvent être disposées au voisinage l'une de l'autre de telle manière qu'une cavité de moulage (24) soit formée entre celles-ci, dans lequel il est prévu au moins une partie de moule extensible et rétractable (12, 14) comme partie de moule intérieure supplémentaire, **caractérisé en ce que** la partie de moule extensible et rétractable (12, 14) est intégrée dans la partie de moule intérieure (10), dans lequel il est prévu dans la partie de moule intérieure (10) un volume de réception dans lequel la partie de moule rétractée (12, 14) vient se loger, dans lequel la partie de moule extensible et rétractable étendue déborde latéralement et/ou frontalement au-delà de la partie de moule intérieure (10) et dans lequel en outre un moyen de commande pour l'extension et le retrait automatiques de la partie de moule extensible et rétractable (12, 14) est configuré et disposé de telle manière que la partie de moule extensible et rétractable (12, 14) étendue puisse être disposée avec une inclinaison variable qui peut être prédéterminée.

2. Dispositif suivant la revendication 1, **caractérisé en ce que** deux parties de moule extensibles et rétractables (12, 14) sont disposées sur un côté de la partie de moule intérieure (10).

3. Dispositif suivant la revendication 2, **caractérisé en ce que** les deux parties de moule extensibles et rétractables (12, 14) sont inclinées d'un angle prédéterminé par rapport à la partie de moule intérieure (10).

4. Dispositif suivant la revendication 3, **caractérisé en ce que** l'angle prédéterminé pour une partie de moule extensible et rétractable (12) vaut de préférence environ 15 degrés et pour l'autre partie de moule extensible et rétractable (14) de préférence environ 19 degrés.

5. Dispositif suivant l'une quelconque des revendications précédentes, **caractérisé en ce que** les parties de moule extensibles et rétractables (12, 14) sont de forme incurvée.

6. Dispositif suivant l'une quelconque des revendications précédentes, **caractérisé en ce qu'**il est prévu, dans au moins une partie de moule extensible et rétractable (12, 14) et/ou dans une partie de moule extérieure (20, 22) associée à celle-ci, un fourreau (36) qui forme un orifice d'échappement d'huile dans une boîte (30) du réservoir d'huile (32) formée par cette partie de moule extensible et rétractable (12).

7. Dispositif suivant la revendication 6, **caractérisé en ce que** le fourreau (36) présente un dispositif de chauffage.

8. Dispositif suivant l'une quelconque des revendications précédentes, **caractérisé en ce que** les parties de moule extensibles et rétractables (12, 14) présentent un dispositif de refroidissement.

9. Dispositif suivant l'une quelconque des revendications précédentes, **caractérisé en ce que** les parties de moule extérieures (20, 22) présentent un dispositif de chauffage.

10. Dispositif suivant l'une quelconque des revendications précédentes, **caractérisé en ce que** la partie de moule extensible et rétractable (12, 14) déborde en contre-dépouille au-delà de la partie de moule intérieure (10), par rapport à une direction de démoulage de la partie de moule intérieure (10).

11. Dispositif suivant l'une quelconque des revendications précédentes, **caractérisé en ce que** les parties de moule extérieures (20, 22) sont adaptées de façon correspondante à un contour de la partie de moule extensible et rétractable (12, 14) en position étendue.
